# EUROPEAN PATENT SPECIFICATION

(11) **EP 1 403 989 B1**
(45) Date of publication and mention of the grant of the patent: **08.11.2017**
(21) Application number: 03077946.6
(22) Date of filing: 18.09.2003
(51) Int. Cl.: H02B 1/30

(54) **Electrical cabinet made of panel elements**
Schaltschrank aus Paneelelementen
Armoire électrique composée d'éléments-panneaux

(30) Priority: 26.09.2002 IT BG20020028
(43) Date of publication of application: 31.03.2004
(73) Proprietor: ABB S.p.A., 20124 Milano (IT)
(72) Inventor: Cagliani, Cristian, 23847 Molteno (LC) (IT); Cagliani, Daniele, 23847 Molteno (LC) (IT)
(74) Representative: De Bortoli, Eros

(56) References cited:
- EP-A- 0 577 140
- DE-A- 10 104 214
- US-B1- 6 209 976

## Description

The present invention refers to a cabinets structure for electric switchboards and to electric switchboards which use such structure; this invention especially refers to a cabinets structure for electric switchboards in which the structural elements that form the cabinet are properly configurated to facilitate the assembling, according to a particularly efficient solution as far as praticality of use and production are concerned.

Generally, the cabinets for electric switchboards are designed and realised in order to satisfy the specific functional requirements of the components that form the cabinet. As it is known, the electric switchboards use a system of parallel metallic bars, each of them is connected with a corresponding phase of the electric feeding system. Inside the cabinet, the bars are electrically connected with the devices used in the switchboard, for example the circuit breakers, and are geometrically coupled with proper isolating and supporting devices. Such isolating and supporting devices, besides electrically isolating the bars, allow their connection to the cabinet structure. In this way, the electrodynamic forces generated by the current flowing in the bars are discharged on the cabinet structure, which must have consequently proper characteristic of structural resistence. Furthermore, the electric devices are placed on one or more fixing guides, connected to the cabinet frame directly or through proper additional connecting elements.

In order to satisfy such requirements, the cabinets generally have a parallelepiped structure, inside of which is defined a proper volume in order to place the different switchboard components and whose frame allows the fixing of the supporting elements of such components, of the isolating panels and of the cabinet door.

In particular, the frame is generally made up of two sub-structures of generally rectangular shape, that form respectively the lower and upper basis of the parallelepiped structure. Such sub-structures are generally made up of four angular elements, normally three-way joints, which are mutually connected through section bars placed in a substantially horizontal position and form the sides of the basic rectangle. The two sub-structure are mutually connected on their turn through vertical section bars, so called posts, each of them being connected, in correspondence with its ends, to two angular elements. A number of holes are normally positioned along the vertical posts for the direct fixing of the supporting elements of the electric devices and of the distribution bars or for the fixing of intermediate transversal elements, with which such supporting elements are connected. Document DE10104214 A1 discloses a cabinet made of plate-like walls connected by corner frame sections. At the present state of the art, the assembling methods of the different elements forming the cabinet, although having the advantages of a modular construction, are not fully satisfying, in particular as far as number and shape of the requested components in order to realise the sub-structure is concerned. Furthermore, the high amount of existing connections requires to use a much higher number of fixing elements, such for example screws, bolts and similar.

The assembling procedure, given the high amount of components and connections, requires relatively long working period and/or the employment of at least two workers with consequent increase of the final installation costs.

It is evident from what above described, that at the present level of the art there is the necessity to have cabinets structures for electric switchboards which represent a valid alternative to the above described solutions.

Main aim of the present invention is to provide a cabinets structure for electric switchboards, which allows the reduction of the number of necessary components with consequent advantages for the production.

Within this aim, one of the scopes is to realise a cabinet structure for electric switchboards, in which the connection among the different elements forming the structure is of easy construction, facilitating then the assembling and reducing the production time.

Another important scope is to realise a cabinet structure for electric switchboards in which the number of fixing elements is reduced, consequently reducing the amount of corresponding fixing procedures as well.

Not last aim of this invention is to realise a cabinets structure of high reliability, relatively easy to produce and with competitive costs.

This aim, as well as these and other scopes which will better emerge afterwards, are obtained with a cabinet structure for electric switchboards, said cabinet having a first rear wall, a second and a third wall respectively superior and inferior, a fourth and a fifth sidewalls and a sixth front wall, such walls defining an internal volume, able to contain one or more electric devices. The cabinet structure for electric switchboards according to the invention is characterised in that it includes:
- a first sub-structure of substantially rectangular shape, at least two edges of such first sub-structure being folded in order to form proper coupling profiles, coupling means being placed in correspondence with the angles of such first sub-structure;
- a second and a third sub-structure, respectively superior and inferior, each of them including a first flat wall of substantially rectangular shape, at least two edges of such first flat wall being folded in order to build proper coupling profiles;
- a fourth and a fifth lateral sub-structures, each of them including a second flat wall of substantially rectangular shape, at least an edge of such second flat wall being folded in order to form a proper coupling profile, coupling means being placed in correspondence with the ends of such at least a folded edge, each of these fourth and fifth lateral sub-structures including first link means properly placed on them;
- a sixth front sub-structure of substantially rectangular shape, which includes second link means, which can be coupled with such first link means,
such first, second, third, fourth and fifth sub-structure being directly coupled to one another. Further, each of these first, second and third sub-structures build up a profile with three flat surfaces as defined in claim 1. The cabinet structure for electric switchboards according to the invention, has therefore a completely innovative configuration, in particular for what concerns for example the vertical posts, which are integrated in the structure of the sidewalls and/or rear wall, allowing their direct coupling.

Further characteristics and advantages of the invention will better emerge from the description of favourite but not limiting embodiments of a cabinet structure for electric switchboards according to the invention, represented as non-limiting examples in the attached drawings, in which:
- figure 1 is a perspective view of a cabinet for electric switchboards realised by assembling a structure according to the invention;
- figure 2 is a perspective view of the rear sub-structure of a cabinet for electric switchboards according to the invention;
- figure is a perspective view of a detail of the sub-structure shown in figure 2;
- figure 4 is a perspective view of the rear sub-structure and of the sub-structures superior and inferior of a cabinet for electric switchboards according to the invention;
- figure 5 is a perspective view of the rear, superior, inferior and lateral sub-structures of a cabinet for electric switchboards according to the invention.

The structure of a cabinet for electric switchboards according to the invention will be described with reference to the above mentioned figures, without limiting in any way its application. In the figures, the same reference number refers to similar components.

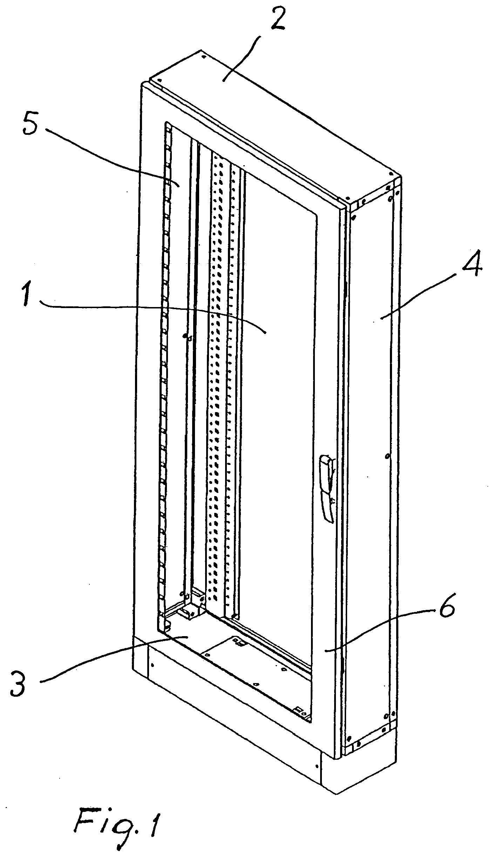

With reference to figure 1, a cabinet for electric switchboards generally presents a first rear walls 1, a second and a third wall respectively superior 2 and inferior 3, a fourth and a fifth sidewalls (4 and 5) and a sixth front wall 6. Such walls define then an interior volume able to contain one or more electric devices.

The terms rear and front superior and inferior, and lateral refer to the condition of normal installation of the electric switchboards and to the corresponding access modalities for a worker, referring with front to the wall in which it is placed the access door to the switchboard and from which the users have access to the switchboard and to the corresponding devices.

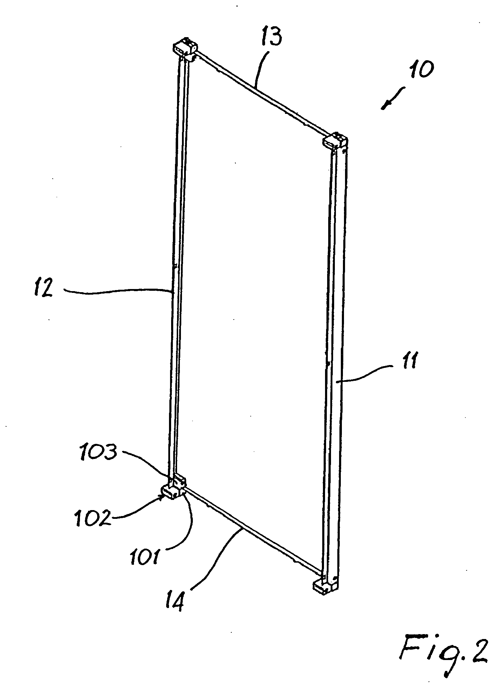

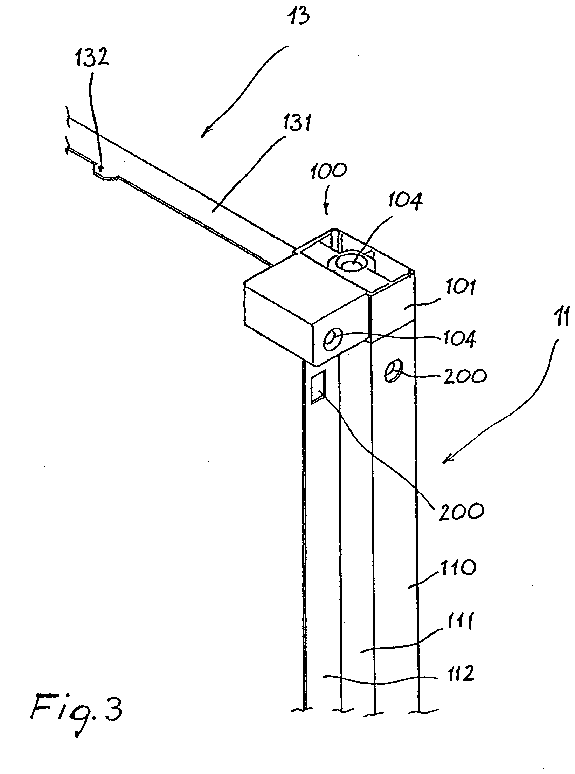

With reference to figures 2 and 3, the cabinet structure for electric switchboards according to the invention includes a first rear sub-structure 10 of substantially rectangular shape, with four edges 11, 12, 13 and 14, at least two of such edges being folded in order to form proper coupling profiles. Coupling means 100 are then placed in correspondence with the angles of such first sub-structure 10.

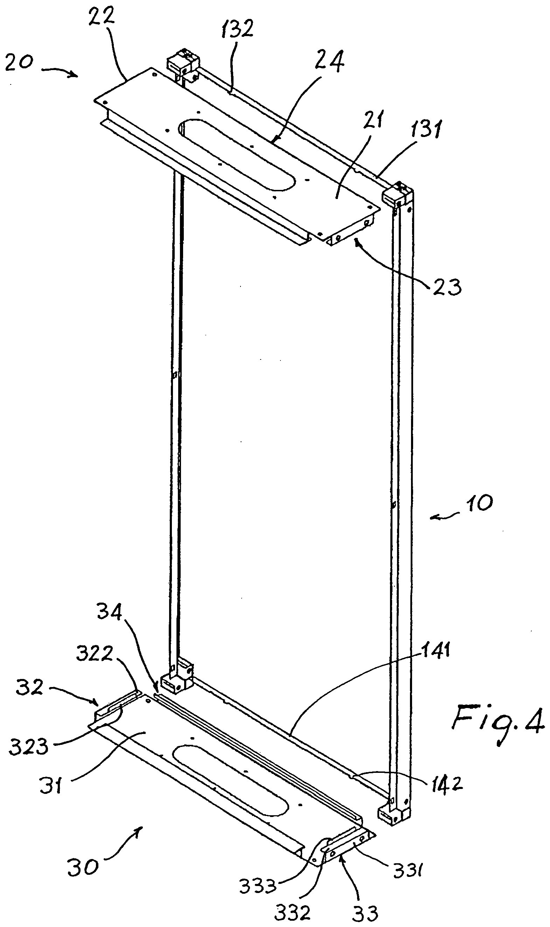

With reference to figure 4, the cabinet structure according to the invention present a second and a third sub-structure, respectively superior 20 and inferior 30. Each of such second and third sub-structure includes a first flat wall 21 and 31 of substantially rectangular shape. At least two edges of the first flat wall are folded in order to form proper coupling profiles.

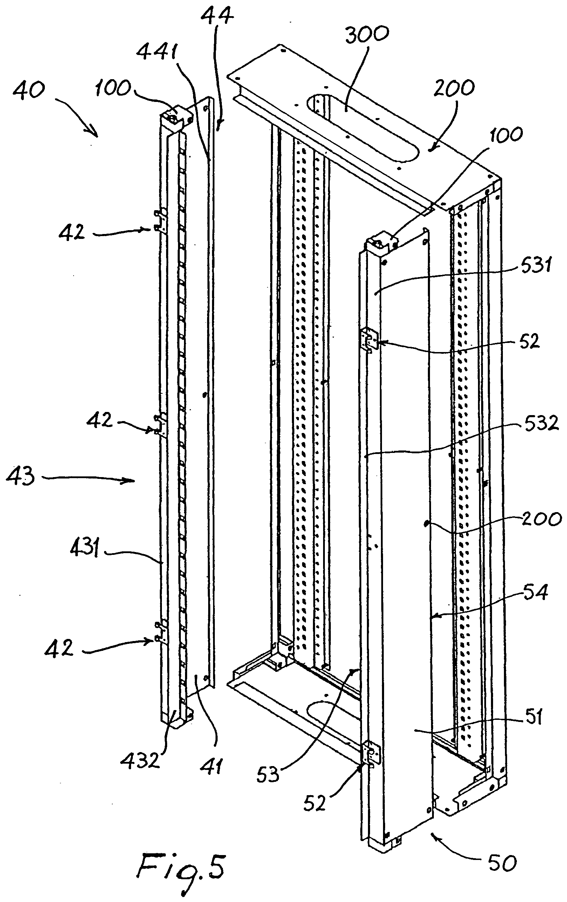

In figure 5 the fourth 40 and fifth 50 lateral sub-structure of the structure according to the invention are represented, each of this fourth and fifth sub-structure 40, 50 including a second flat wall of substantially rectangular shape, referred to respectively with the reference numbers 41 and 51. At least one edge of the second flat wall is folded in order to form a proper coupling profile; furthermore, coupling means 100 are placed in correspondence with the ends of the folded edge.

The fourth and fifth lateral sub-structures include then first link means 42 and 52 properly placed on them. These link means can be coupled with corresponding link means placed on the sixth front sub-structure (not shown in the figure). In practice, the sixth front sub-structure is a door of substantially rectangular shape and the link means consists of the system of hinges, handle and door lock, which allow the door opening and closing.

Preferably, the two lateral edges 11 and 12 of the first sub-structure 10 are folded to the interior and form a profile with three flat surfaces 110, 111 and 112. The first 110 and the second 111 of these three surfaces define a volume able to contain the coupling means, as clearly shown in figure 3. The second 11 and third 112 of such three surfaces define on the contrary the coupling profile of the first sub-structure 10 with the fourth 40 and the fifth 50 lateral sub-structures. The walls 110 and 112 are substantially parallel one to another and substantially perpendicular to the wall 111 and to the lying plane of the sub-structure 10.

Advantageously, and with particular reference to figure 3, at least one portion of the superior 13 and inferior 14 edges of the first sub-structure 10 are folded to the interior defining a flat surface 131 and 141, able to couple respectively with the second 20 and third 30 sub-structure. The surfaces 131 and 141 are generally perpendicular to the lying plane of the sub-structure 10.

With reference to figures 4 and 5, preferably at least one portion of each lateral edge 22, 23 and 32, 33 of the first flat wall 21 and 31 of the second and third sub-structure 20 and 30, is folded to the interior and forms a profile with three flat surfaces. With reference only to the edge 33 of the first wall 31, the first 331 and the second 332 of such three flat surfaces define a volume able to contain the coupling means 100, while the second 332 and the third 333 of such three flat surfaces define the coupling profile of such second and third sub-structures with such fourth and fifth lateral sub-structures. The walls 331 and 333 are substantially parallel each other and substantially perpendicular to the wall 332 and to the lying plane of the flat surface 31. Similar structure, not shown in detail in figure, is realised in correspondence with the edges 22, 23 and 32.

Furthermore, according to a further preferred embodiment, at least a portion of the superior edge 24, 34 of such first flat wall is folded to the interior according to a step profile defining a flat surface able to couple with such first sub-structure 10. In particular, the step profile on the rear edge 24 couples with the flat surface 131 on the superior edge 13 of the first sub-structure 10, while the step profile on the rear edge 34 couples with the flat surface 141 defined on the inferior edge 14 of the first sub-structure 10.

Preferably, on the step profile on the rear edge 24, 34 is defined at least one or more slots (not shown in the figure) able to engage with corresponding protrusions 132 and 142 defined on the superior 13 and inferior 14 edges of such first sub-structure, in correspondence with the flat surfaces 131 and 141, respectively.

The first flat surface 21, 31 can be continuous or can have one or more holes 300 of different shapes and dimensions, as represented in the figures.

With reference to figure 5, the front edge 43, 53 of the second flat wall 41, 51 of the fourth and fifth sub-structure 40, 50 is folded to the interior according to a step profile having a first flat surface 431, 531. As it is clear from figure 5, the flat surface 431, 531 defines a housing area for the coupling means 100. The step profile has furthermore a second flat surface 432, 532 of coupling with the sixth sub-structure. In the embodiment of figure 5, the first link means are placed in correspondence with the first flat surface 431, 531.

Advantageously, the rear edge 44, 54 of such second flat wall 41, 51 is folded to the interior, defining a flat surface substantially perpendicular to the wall 41, 51, for example the surface defined with the reference number 441 of figure 5, of coupling with such first sub-structure, and in particular with the surface 111, placed in correspondence with the lateral edge 11 of the first sub-structure 10.

The assembling is facilitated by the fact that the basis of the sub-structures 40 and 50 lies on the flat surface 332 and 322 of the third sub-structure 30; furthermore, the flat wall 41 couples with the flat surface 323 of the third sub-structure 30 and with the corresponding surface (not shown in the figure) of the second sub-structure 20, while the flat wall 51 couples with the flat surface 333 of the third sub-structure 30 and with the corresponding surface (not shown in the figure) of the second sub-structure 20.

The coupling means 100 preferably include angular joints having an L-shaped body which has a central portion 101 and two lateral portions 102 and 103, each of them being substantially shaped as parallelepiped. As clearly shown in the figures, the lateral portions 102,103 of the angular joints engage in the spaces defined by the profiled edges of the different sub-structures, allowing a solid and at the same time rapid assembling.

The fixing of the structure can be realised wit proper means, for example through holes 104 on the angular joints and/or holes 200 in proper areas of the different sub-structures, in which screws or other fixing systems engage.

It has been shown how the cabinet structure for electric switchboards according to the invention completely fulfils the intended aim and scopes. It has been shown that the use of the different sub-structures that form the cabinet structure, allows to considerably improve the production time of the single pieces, because it is possible to obtain the different sub-structures through relatively simple and fast procedures of sheets cutting and folding. Given the modularity and symmetry of the structure, the different components amount is reduced, reducing then the number of production cycles necessary to produce the different types of sub-structures.

The assembling is particularly fast, as consequence of the reduced amount of components and of the low number of connections, reducing then time and costs of installation charged to the final user. The cabinet structure according to the invention is sufficiently solid, since the particular structure of the different sub-structures, and in particular of the different section edges, gives proper mechanic stability. The presence of proper coupling means, for example angular joints contributes to solidity, without the necessity of vertical posts of particular structure.

The cabinet structure so conceived is susceptible of various changes and variations, all belonging to the field of this invention; furthermore all the details can be substituted by others technically equivalent.

## Claims

1. A cabinet structure for electric switchboards, said cabinet having a first rear wall (1), a second (2) and a third (3) wall respectively superior and inferior, a fourth (4) and a fifth (5) sidewall and a sixth front wall (6), said walls defining an internal volume able to contain one or more electric devices, said cabinet structure including:
- a first sub-structure (10) with substantially rectangular shape, at least two edges (11, 12, 13, 14) of such first sub-structure being folded to form proper coupling profiles, coupling means (100) being furthermore placed in correspondence with the corners of such first sub-structure;
- a second and a third sub-structures (20, 30), respectively superior and inferior, each of said second and third sub-structures including one first flat wall (21, 31) with substantially rectangular shape, at least two edges (22, 23, 24, 32, 33, 34) of said first flat wall being folded to form proper coupling profiles;
- a fourth and a fifth lateral sub-structures (40, 50), each of such fourth and fifth sub-structures including a second flat wall (41, 51) of substantially rectangular shape, at least one edge (43,53) of said second flat wall (41,51) being folded to form a proper coupling profile, coupling means (100) being placed in correspondence with the ends of such at least a folded edge (43,53), each of said fourth and fifth lateral sub-structures including first link means (42, 52) properly placed on them;
- a sixth front sub-structure of substantially rectangular shape including second link means which can be coupled with such first link means (42,52) wherein said first (10), second (20), third (30), fourth (40) and fifth (50) sub-structures are directly coupled one to another;
**characterised in that**
- the two lateral edges (11, 12) of said first sub-structure (10) are folded to the interior building a profile with three flat surfaces (110, 111, 112), the first and second (110, 111) of said flat surfaces defining a volume able to contain said coupling means (100), the second and the third (111, 112) of said flat surfaces defining the coupling profile of said first sub-structure (10) with said fourth and fifth lateral sub-structures (40, 50), said first and third flat surface (110, 112) being parallel one to another and perpendicular to said second flat surface (111) and to a lying plane of said first substructure (10);
- at least a portion of each lateral edge (22,23,24,32,33,34) of said first wall is folded to the interior forming a profile with three flat surfaces (322,323,331,332,333), the first and the second (331, 332) of said flat surfaces defining a volume able to contain said coupling means (100), the second and third (332, 333) of said flat surfaces defining the coupling profile of said second and third sub-structures with said fourth and fifth lateral sub-structures (40, 50), said first and third flat surface (331, 333) being parallel one to another and perpendicular to said second flat surface (332) and to a lying plane of said first flat wall (31).

2. Cabinet structure for electric switchboards according to claim 1, **characterised in that** at least a portion of the superior and inferior edges (13, 14) of said first sub-structure is folded to the interior, defining a flat surface (131, 141) able to couple with said second and third sub-structure (20, 30).

3. Cabinet structure for electric switchboards according to any one of the previous claims, **characterised in that** at least a portion of the rear edge (24, 34) of said first flat wall is folded to the interior according to a step profile, defining a flat surface able to couple with said first sub-structure (10).

4. Cabinet structure for electric switchboards according to claim 3, **characterised in that** on said step profile is defined at least a crack able to engage with a corresponding jut (132, 142) defined on the superior and inferior edges (13, 14) of said first sub-structure (10).

5. Cabinet structure for electric switchboards according to any one of the previous claims, **characterised in that** the front edge (43, 53) of said second flat wall (41, 51) is folded to the interior according to a step profile having a first flat surface (431, 531) which defines a housing area for said coupling means (100) and a second flat surface (432, 532) with said sixth sub-structure.

6. Cabinet structure for electric switchboards according to any one of the previous claims, **characterised in that** the rear edge (44, 54) of said second flat wall (41, 51) is folded to the interior, defining a flat coupling surface with said first sub-structure (10).

7. Cabinet structure for electric switchboards according any one of the previous claims, **characterised in that** said coupling means (100) include angular joints having a body shaped as L which has a central portion (101) and two lateral portions (102, 103), each of them being substantially shaped as parallelepiped.

8. Cabinet structure for electric switchboards according any one of the previous claims, **characterised in that** said coupling means (100) include fixing means.

9. Cabinet structure for electric switchboards according any one of the previous claims, **characterised in that** fixing means are placed in correspondence with one or more coupling profiles.

10. An electric switchboard, including a cabinet structure according to any one of the previous claims.

## Patentansprüche

1. Schaltschrankstruktur für elektronische Schaltanlagen, wobei der Schaltschrank eine erste Rückwand (1), eine zweite (2) und dritte (3) Wand entsprechend übergeordnet und untergeordnet, eine vierte (4) und eine fünfte (5) Seitenwand und eine sechste Vorderwand (6) hat, wobei die Wände ein internes Volumen definieren, das in der Lage ist, eine oder mehrere elektronische Einrichtungen aufzunehmen, wobei die Schaltschrankstruktur umfasst:
- eine erste Substruktur (10) mit einer im Wesentlichen rechteckigen Gestalt, wobei mindestens zwei Ränder (11, 12, 13, 14) der ersten Substruktur gefaltet sind, um angemessene Kupplungsprofile auszubilden, wobei weiterhin Kupplungsmittel (100) in Übereinstimmung mit den Ecken der ersten Substruktur angeordnet sind;
- eine zweite und eine dritte Substruktur (20, 30), entsprechend übergeordnet und untergeordnet, wobei jede der zweiten und dritten Substrukturen eine erste flache Wand (21, 31) mit einer im Wesentlichen rechteckigen Gestalt umfasst, wobei mindestens zwei Ränder (22, 23, 24, 32, 33, 34) der ersten flachen Wand gefaltet sind, um angemessene Kupplungsprofile auszubilden;
- eine vierte und eine fünfte laterale Substruktur (40, 50), wobei jede der vierten und fünften Sub strukturen eine zweite flache Wand (41, 51) mit einer im Wesentlichen rechteckigen Gestalt umfasst, wobei mindestens ein Rand (43, 53) der zweiten flachen Wand (41, 51) gefaltet ist, um ein angemessenes Kupplungsprofil auszubilden, wobei Kupplungsmittel (100) in Übereinstimmung mit den Enden einer der mindestens einen gefalteten Ecke (43, 53) angeordnet sind, wobei jede der vierten und fünften lateralen Sub strukturen erste Verbindungsmittel (42, 52) umfasst, die angemessen auf diesen angeordnet sind;
- eine sechste Vordersubstruktur mit einer im Wesentlichen rechteckigen Gestalt, die zweite Verbindungsmittel umfasst, die mit den ersten Verbindungsmitteln (42, 52) gekuppelt werden können, wobei die ersten (10), die zweiten (20), die dritten (30), die vierten (40) und die fünften (50) Substrukturen direkt miteinander gekuppelt sind;
**dadurch gekennzeichnet, dass**
- die zwei lateralen Ecken (11, 12) der ersten Substruktur (10) nach Innen gefaltet sind, wodurch sie ein Profil mit drei flachen Oberflächen (110, 111, 112) bilden, wobei die ersten und zweiten (110, 111) der flachen Oberflächen ein Volumen definieren, das in der Lage ist, die Kupplungsmittel (100) aufzunehmen, wobei die zweiten und die dritten (111, 112) der flachen Oberflächen das Kupplungsprofil der ersten Substruktur (10) mit den vierten und fünften lateralen Substrukturen (40, 50) definieren, wobei die ersten und dritten flachen Oberflächen (110, 112) parallel zu einander und senkrecht zu der zweiten flachen Oberfläche (111) und einer Liegeebene der ersten Substruktur (10) sind;
- mindestens ein Abschnitt jeder lateralen Ecke (22, 23, 24, 32, 33, 34) der ersten Wand nach Innen gefaltet ist, wodurch ein Profil mit drei flachen Oberflächen (322, 323, 331, 332, 333) ausgebildet wird, wobei die ersten und die zweiten (331, 332) der flachen Oberflächen ein Volumen definieren, das in der Lage ist, die Kupplungsmittel (100) aufzunehmen, wobei die zweiten und dritten (332, 333) der flachen Oberflächen das Kupplungsprofil der zweiten und dritten Substrukturen mit den vierten und fünften lateralen Substrukturen (40, 50) definieren, wobei die ersten und dritten flachen Oberflächen (331, 333) parallel zueinander und senkrecht zu der zweiten flachen Oberfläche (332) und zu einer Liegeebene der ersten flachen Wand (31) sind.

2. Schaltschrankstruktur für elektronische Schaltanlagen nach Anspruch 1, **dadurch gekennzeichnet, dass** mindestens ein Abschnitt der übergeordneten und untergeordneten Ecken (13, 14) der ersten Substruktur nach Innen gefaltet ist, wodurch eine flache Oberfläche (131, 141) definiert ist, die in der Lage ist, mit der zweiten und dritten Substruktur (20, 30) zu kuppeln.

3. Schaltschrankstruktur für elektronische Schaltanlagen nach einem der vorhergehenden Ansprüche, **dadurch gekennzeichnet, dass** mindestens ein Abschnitt der hinteren Ecken (24, 34) der ersten flachen Wand nach Innen entsprechend einem Stufenprofil gefaltet ist, wodurch eine flache Oberfläche definiert ist, die in der Lage ist, mit der ersten Substruktur (10) zu kuppeln.

4. Schaltschrankstruktur für elektronische Schaltanlagen nach Anspruch 3, **dadurch gekennzeichnet, dass** auf dem Stufenprofil mindestens ein Spalt definiert ist, der in der Lage ist, mit einer entsprechenden Auskragung (132, 142), die auf den übergeordneten und untergeordneten Ecken (13, 14) definiert ist, in Eingriff zu kommen.

5. Schaltschrankstruktur für elektronische Schaltanlagen nach einem der vorhergehenden Ansprüche, **dadurch gekennzeichnet, dass** die vorderen Ecken (43, 53) der zweiten flachen Wand (41, 51) entsprechend einem Stufenprofil, das eine erste flache Oberfläche (431, 531) hat, die einen Gehäusebereich für die Kupplungsmittel (100) und eine zweite flache Oberfläche (432, 532) mit der sechsten Substruktur definiert, nach Innen gefaltet sind.

6. Schaltschrankstruktur für elektronische Schaltanlagen nach einem der vorhergehenden Ansprüche, **dadurch gekennzeichnet, dass** die hinteren Ecken (44, 54) der zweiten flachen Wand (41, 51) nach Innen gefaltet sind, wodurch eine flache Kupplungsoberfläche mit der ersten Substruktur (10) definiert ist.

7. Schaltschrankstruktur für elektronische Schaltanlagen nach einem der vorhergehenden Ansprüche, **dadurch gekennzeichnet, dass** die Kupplungsmittel (100) Winkelgelenke umfassen, die einen Körper haben, der als L geformt ist, der einen zentralen Abschnitt (101) und zwei laterale Abschnitte (102, 103) hat, wobei jeder von diesen im Wesentlichen als ein Parallelepiped gestaltet ist.

8. Schaltschrankstruktur für elektronische Schaltanlagen nach einem der vorhergehenden Ansprüche, **dadurch gekennzeichnet, dass** die Kupplungsmittel (100) Befestigungsmittel umfassen.

9. Schaltschrankstruktur für elektronische Schaltanlagen nach einem der vorhergehenden Ansprüche, **dadurch gekennzeichnet, dass** Befestigungsmittel in Übereinstimmung mit einem der mehreren Kupplungsprofilen angeordnet sind.

10. Elektronische Schaltanlage, die eine Schaltschrankstruktur nach einem der vorhergehenden Ansprüche umfasst.

## Revendications

1. Structure d'armoire pour tableaux électriques, ladite armoire ayant une première paroi arrière (1), une deuxième (2) et une troisième (3) paroi respectivement supérieure et inférieure, une quatrième (4) et une cinquième (5) paroi latérale et une sixième paroi avant (6), lesdites parois définissant un volume interne capable de contenir un ou plusieurs dispositifs électriques, ladite structure d'armoire comprenant :
- une première sous-structure (10) de forme sensiblement rectangulaire, au moins deux bords (11, 12, 13, 14) de cette première sous-structure étant repliés pour former des profilés de couplage appropriés, des moyens de couplage (100) étant en outre placés en correspondance avec les coins de cette première sous-structure ;
- une deuxième et une troisième sous-structure (20, 30), respectivement supérieure et inférieure, chacune desdites deuxième et troisième sous-structures comprenant une première paroi plate (21, 31) de forme sensiblement rectangulaire, au moins deux bords (22, 23, 24, 32, 33, 34) de ladite première paroi plate étant repliés pour former des profilés de couplage appropriés ;
- une quatrième et une cinquième sous-structure latérale (40, 50), chacune de ces quatrième et cinquième sous-structures comprenant une deuxième paroi plate (41, 51) de forme sensiblement rectangulaire, au moins un bord (43, 53) de ladite deuxième paroi plate (41, 51) étant replié pour former un profilé de couplage approprié, des moyens de couplage (100) étant placés en correspondance avec les extrémités dudit au moins un bord replié (43, 53), chacune desdites quatrième et cinquième sous-structures latérales comprenant des premiers moyens de liaison (42, 52) adéquatement placés sur celles-ci ;
- une sixième sous-structure avant de forme sensiblement rectangulaire comprenant des deuxièmes moyens de liaison qui peuvent être couplés auxdits premiers moyens de liaison (42, 52), dans laquelle lesdites première (10), deuxième (20), troisième (30), quatrième (40) et cinquième (50) sous-structures sont directement couplées les unes aux autres ;
**caractérisée en ce que**
- les deux bords latéraux (11, 12) de ladite première sous-structure (10) sont repliés vers l'intérieur en formant un profilé à trois surfaces plates (110, 111, 112), la première et la deuxième (110, 111) desdites surfaces plates définissant un volume capable de contenir lesdits moyens de couplage (100), la deuxième et la troisième (111, 112) desdites surfaces plates définissant le profilé de couplage de ladite première sous-structure (10) avec lesdites quatrième et cinquième sous-structures latérales (40, 50), lesdites première et troisième surfaces plates (110, 112) étant parallèles l'une à l'autre et perpendiculaires à ladite deuxième surface plate (111) et à un plan horizontal de ladite première sous-structure (10) ;
- au moins une partie de chaque bord latéral (22, 23, 24, 32, 33, 34) de ladite première paroi est repliée vers l'intérieur en formant un profilé à trois surfaces plates (322, 323, 331, 332, 333), la première et la deuxième (331, 332) desdites surfaces plates définissant un volume capable de contenir lesdits moyens de couplage (100), la deuxième et la troisième (332, 333) desdites surfaces plates définissant le profilé de couplage desdites deuxième et troisième sous-structures avec lesdites quatrième et cinquième sous-structures latérales (40, 50), lesdites première et troisième surfaces plates (331, 333) étant parallèles l'une à l'autre et perpendiculaires à ladite deuxième surface plate (332) et à un plan horizontal de ladite première paroi plate (31).

2. Structure d'armoire pour tableaux électriques selon la revendication 1, **caractérisée en ce qu'**au moins une partie des bords supérieur et inférieur (13, 14) de ladite première sous-structure est repliée vers l'intérieur, définissant une surface plate (131, 141) capable de se coupler avec lesdites deuxième et troisième sous-structures (20, 30).

3. Structure d'armoire pour tableaux électriques selon l'une quelconque des revendications précédentes, **caractérisée en ce qu'**au moins une partie du bord arrière (24, 34) de ladite première paroi plate est repliée vers l'intérieur selon un profilé en gradin, définissant une surface plate capable de se coupler avec ladite première sous-structure (10).

4. Structure d'armoire pour tableaux électriques selon la revendication 3, **caractérisée en ce que** sur ledit profilé en gradin est définie au moins une fente capable de venir en prise avec une saillie correspondante (132, 142) définie sur les bords supérieur et inférieur (13, 14) de ladite première sous-structure (10).

5. Structure d'armoire pour tableaux électriques selon l'une quelconque des revendications précédentes, **caractérisée en ce que** le bord avant (43, 53) de ladite deuxième paroi plate (41, 51) est replié vers l'intérieur selon un profilé en gradin ayant une première surface plate (431, 531) qui définit une zone de logement pour lesdits moyens de couplage (100) et une deuxième surface plate (432, 532) avec ladite sixième sous-structure.

6. Structure d'armoire pour tableaux électriques selon l'une quelconque des revendications précédentes, **caractérisée en ce que** le bord arrière (44, 54) de ladite deuxième paroi plate (41, 51) est replié vers l'intérieur, définissant une surface de couplage plate avec ladite première sous-structure (10).

7. Structure d'armoire pour tableaux électriques selon l'une quelconque des revendications précédentes, **caractérisée en ce que** lesdits moyens de couplage (100) comprennent des jonctions angulaires ayant un corps de forme en L qui présente une partie centrale (101) et deux parties latérales (102, 103), chacune d'elles étant sensiblement en forme de parallélépipède.

8. Structure d'armoire pour tableaux électriques selon l'une quelconque des revendications précédentes, **caractérisée en ce que** lesdits moyens de couplage (100) comprennent des moyens de fixation.

9. Structure d'armoire pour tableaux électriques selon l'une quelconque des revendications précédentes, **caractérisée en ce que** des moyens de fixation sont placés en correspondance avec un ou plusieurs profilés de couplage.

10. Tableau électrique, comprenant une structure d'armoire selon l'une quelconque des revendications précédentes.
